# EUROPEAN PATENT APPLICATION

(11) **EP 0 721 270 A1**
(43) Date of publication of application: **10.07.1996**
(21) Application number: 95309021.4
(22) Date of filing: 12.12.1995
(51) Int. Cl.: H04L 27/152

(54) **Direct conversion receiver for multilevel FSK signals**

(30) Priority: 04.01.1995 GB 9500018
(71) Applicant: PLESSEY SEMICONDUCTORS LIMITED, Swindon, Wiltshire SN2 2QW (GB)
(72) Inventor: Lawton, Rodney J., Swindon, Wiltshire (GB)
(74) Representative: Burrington, Alan

(57) **Abstract**

According to the present invention in an FSK radio receiver having at least four levels of input signal a demodulator comprising at least two cascaded stages is provided, each stage comprising at least one pair of mixer circuits fed with a pair of local oscillator signals in quadrature.

## Description

The present invention relates to radio receivers and more particularly to receivers for receiving a frequency shift keyed (FSK) signal on a radio frequency (RF) carrier. The invention is more particularly concerned with so-called "direct conversion" type or "zero IF" receivers in which FSK signals are mixed with a local oscillator signal to provide quadrature baseband signals which are then applied to a demodulating logic.

An example of a two-level FSK receiver is disclosed in UK patent application 2,189,114. In such a prior art receiver there is received a two-level signal having frequencies Fc plus or minus delta, where Fc is the carrier wave frequency and delta is the FSK modulation deviation. There are first and second signal paths to which the received radio signals are applied, each signal path including a mixer circuit followed by a low pass filter and a limiting amplifier. There is also a local oscillator which applies a local oscillation output directly to one mixer circuit and indirectly to the other mixer circuit through a 90° phase shift network. The outputs from the two signal paths are then fed to a logic network which is arranged to provide a digital output indicative of the relative in-phase or out-off-phase condition of the two signals at the inputs to the logic network.

There is now a requirement for a four-level FSK receiver and the present invention is concerned with the provision of such a receiver and more particularly with providing a circuit which can be effectively realised as a single integrated circuit, i.e. all the components would be incorporated on a single chip. Although the invention is particularly concerned with a four level FSK receiver it could be applied to FSK receivers having levels greater than four, e.g. six or eight.

According to the present invention in a radio receiver for frequency shift keyed (FSK) signals on a radio frequency (RF) carrier and having at least four levels of input signal has a demodulator which comprises at least two cascaded stages, each of which has at least one pair of mixer circuits fed with a pair of local oscillator signals in quadrature.

According to one aspect of the present invention a radio receiver for frequency shift keyed (FSK) signals on a radio frequency (RF) carrier comprising first and second signal paths to which the received radio signals are applied, each signal path including a mixer circuit followed by a low pass filter, a local oscillator running at the carrier frequency, the local oscillator output being mixed with the received radio signals in each mixer circuit, means for introducing a 90° phase shift at the carrier frequency such that the outputs of the two mixer circuits are in phased quadrature, a detector being coupled to the output of the demodulator-modulator, is characterised in that:
the receiver is adapted to receive signals at 2n levels where n is an integral number greater than 1 and the demodulator has n stages each of which includes first and second signal paths to which the received radio signals to that stage are applied, each signal path including a mixer circuit, a local oscillator running at the carrier frequency or an integral multiple of the carrier frequency respectively, the local oscillator output being applied to one mixer circuit direct and to the other mixer circuit of a pair through means for effecting a 90° phase shift, the said detector being connected to the output of the last of the n stages.

How the invention may be carried out will now be described, by way of example only, with reference to the accompanying drawings in which:
Figure 1 is a block diagram of a demodulator for FSK signals coupled to a detector, according to one embodiment of the present invention;
Figure 2 is a logic table showing the input signals to the detector of Figure 1;
Figure 3 shows one detector circuit suitable for use in the arrangement shown in Figure 1; and
Figure 4 shows a second detector circuit suitable for use in the arrangement of Figure 1.

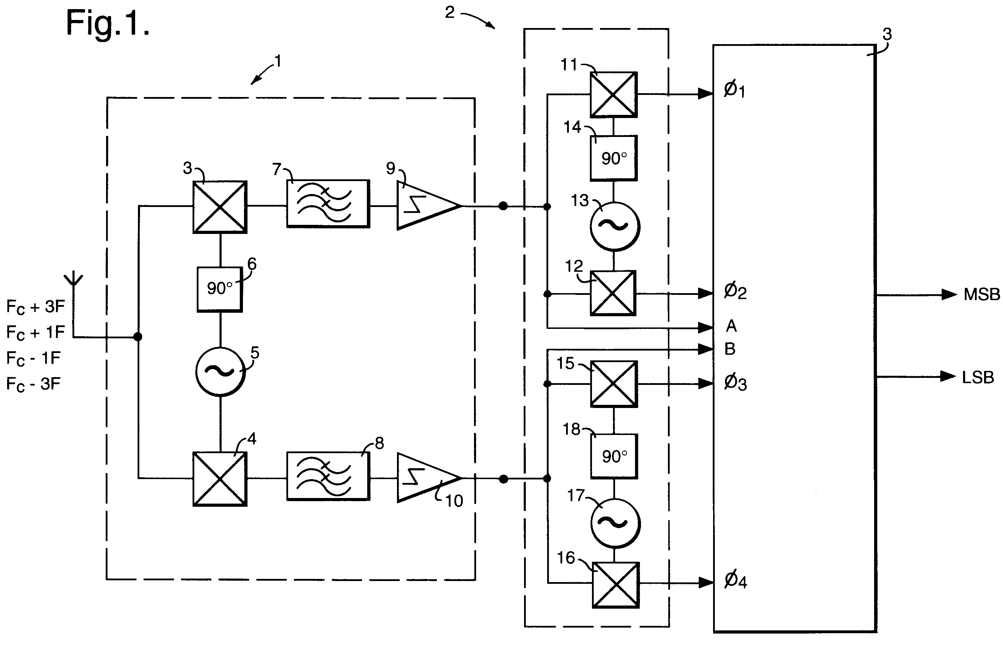

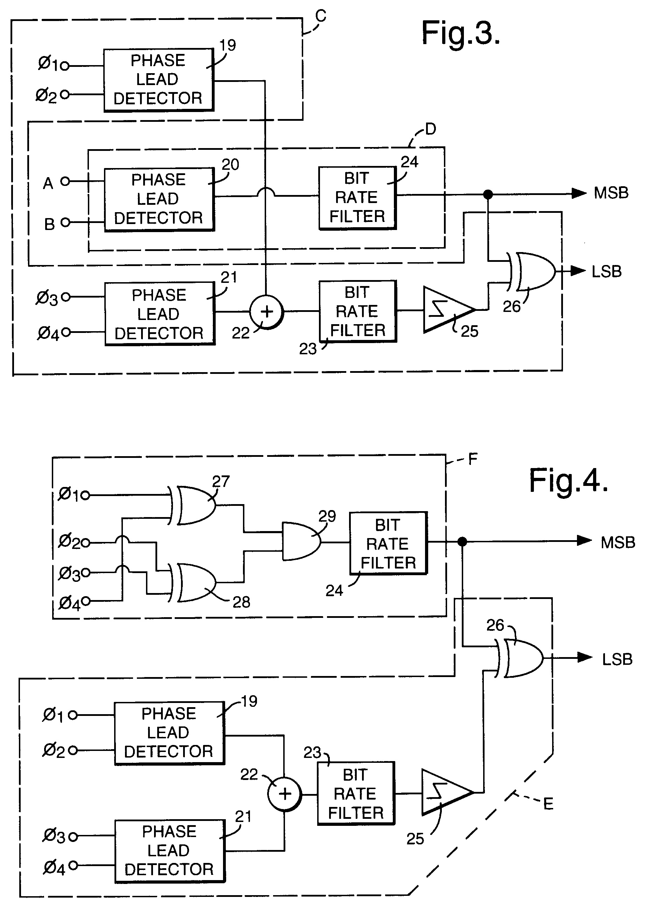

Referring to Figure 1, the receiver comprises a known type of demodulation stage 1, coupled to a second demodulation stage 2, according to the present invention, which in turn is coupled to a detector 3 which could take a number of forms, two of which are shown in Figures 4 and 5.

The demodulator 1 receives, via an aerial, radio signals having four frequencies Fc + 3F, Fc + 1F, Fc - 1F and Fc - 3F, where Fc is a carrier wave frequency and + 3F, + 1F, - 1F and - 3F are the FSK modulation deviations to give the four levels referred to.

The radio signals are fed to two mixer circuits 3 and 4 which are also fed with a local oscillator signal of frequency Fc by a local oscillator 5. The local oscillator signal received by the mixer circuit 3 is phase shifted by 90° relative to the local oscillator signal received by the mixer 4 by means of a phase shift network 6.

The outputs of the mixer circuits 3 and 4 are fed through low-pass filters 7 and 8 respectively to limiting amplifiers 9 and 10 respectively. Square wave signals A and B, which are filtered and limited, emerge from the limiting amplifiers 9 and 10, the square wave signals being in quadrature with respect to one another. The square wave signals A ad B change between logic levels 1 and 0.

The circuit so far described would be suitable for demodulating a 2 level FSK signal and then feeding it to a detector. However, the present invention is concerned with an FSK receiver which has 2n levels of input where n is greater than 1 and in this example there are four levels ie n = 2.

It is therefore necessary to provide a further demodulating stage and this could, in theory, be achieved in a number of ways. However, according to the present invention the second modulation stage comprises, in this embodiment, two arrangements which are substantially the same as the elements 3 to 6 in the first demodulation stage 1 shown in Figure 1. More specifically the output from the limiting amplifier 9 acts as an input to one half of the second demodulator stage 2, the output from the other limiting amplifier 10 acting as the input to the other half of the second demodulator stage 2.

The first half of the second demodulator stage 2 comprises two mixer circuits 11 and 12 which are also fed with a local oscillator signal of frequency 2F from a local oscillator 13. The local oscillator signal received by the mixer circuit 11 is phase shifted by 90° relative to the local oscillator signal received by the mixer circuit 12 by means of a phase shift network 14.

The second half of the second demodulator stage 2 is identical to the first half just described and consists of two mixer circuits 15 and 16, a local oscillator 17 operating at a frequency of 2F and a phase shift network 18.

The first half of the second demodulator stage 2 has outputs from the mixer circuits 11 and 12 indicated as φ¹ and φ² respectively, the second half of the second oscillator stage 2 having similar outputs from the corresponding mixer circuits 15 and 16 indicated as φ³ and φ⁴ in Figure 1.

The output from the limiting amplifier 9 is also fed directly to the detector circuit 3 as indicated at A in Figure 1, a similar connection being made with respect to the output from the other limiting amplifier 10, this being indicated at B in Figure 1.

It should be mentioned that although the second demodulator stage 2 has been shown having first and second halves the present invention would also work if, for example, the elements 15 to 18 were omitted. However, this would result in only half the information being supplied to the detector 3 and although the receiver would operate it would not be as robust in the sense of being tolerant to errors in the signalling.

Although Figure 1 illustrates the invention applied to a 4 level FSK receiver the invention could also be applied to an FSK receiver having more than 4 levels e.g. 6 or 8.

In the case of these higher levels the inventive concept would involve having one or more further stages of demodulation, each stage consisting essentially of twice as many mixer circuits/local oscillator/phase shift network combinations as the immediately preceding demodulator stage. Thus by applying the present inventive concept there would be n demodulator stages in respect of an FSK input having 2n levels.

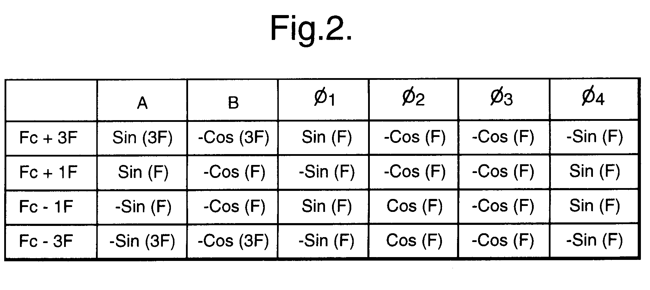

Figure 2 is a table indicating the phases of the respective four level inputs at the demodulator output points A,B, φ¹, φ², φ³ and φ⁴.

As indicated earlier, and as shown diagrammatically in Figure 1, the outputs from the demodulator are fed to a detector 3 which could take a number of forms, the output from the detector 3 being in the form of the Most Significant Bit (MSB) and the least Significant Bit (LSB).

The present invention is not limited to any particular form of the detector but two possible arrangements are shown in Figures 3 and 4.

Referring to Figure 3, the inputs to the detector are shown at φ¹ φ², AB, and φ³ φ⁴. Each of the pairs of inputs φ¹ φ², AB, and φ³ φ⁴ are fed to a phase lead detector 19-21 respectively.

The phase lead detectors 19 and 21 are connected to a first bit rate filter 23 the phase lead detector 20 being connected to a second bit rate filter 24.

The arrangement shown to the right of the bit rate filters 23 and 24 in Figure 3 would depend on the coding logic being employed. However, in this embodiment the output from the first bit rate filter 23 is fed to a limiting amplifier 25 which in turn outputs to EXCLUSIVE OR gate 26 (referred to as a first logic circuit), the output from the EXCLUSIVE OR gate 26 being the least Significant Bit (LSB). The output from the second bit rate filter 24 gives the Most Significant Bit (MSB) and is also connected to the input side of the EXCLUSIVE OR gate 26. In the detector embodiment shown in Figure 3 there is duplication in the sense that the circuit arrangement 19,21,22,23,25 and 26 (and enclosed in the dotted line C) gives the same output as the circuit arrangement 20, 24 (enclosed in the dotted line D) thus providing twice the information that would be provided compared with the situation where only one of these circuit arrangements was employed. A further possible form of the detector 3 is shown in Figure 4.

Those elements of the circuit of Figure 4 which correspond to elements of the circuit of Figure 3 have been given the same reference numerals.

It can thus be seen that that part of the circuit of Figure 4 which is enclosed by the dotted line E is equivalent to that part of the circuit of Figure 3 which is enclosed by the dotted line C. That part of the circuit enclosed by the dotted line marked F in Figure 5 corresponds functionally to that part of the circuit of Figure 4 enclosed by the dotted line D.

Referring to that part of the circuit of Figure 4 indicated at F the inputs φ¹ and φ⁴ are fed to an EXCLUSIVE OR gate 27, the φ¹ input being inverted. The φ² and φ³ inputs are fed to a second EXCLUSIVE OR gate 28.

The outputs from the gates 27 and 28 are input to an AND gate 29 which in turn outputs to the bit rate filter 24, corresponding to the same referenced filter 24. The combination of 27, 28 and 29 is referred to as a second logic circuit.

As with the arrangement of Figure 3 the outputs of the detector take the form of the Most Significant Bit (MSB) and the least Significant Bit (LSB), as indicated in the drawing.

As indicated earlier other designs of detector 3 could be employed with the present invention.

The present invention thus provides a multi-stage direct conversion demodulator suitable for use with an FSK receiver designed to have at least 4 input levels.

## Claims

1. A radio receiver for frequency shift keyed (FSK) signals on a radio frequency (RF) carrier and having at least four levels of input signal has a demodulator which comprises at least two cascaded stages, each of which has at least one pair of mixer circuits fed with a pair of local oscillator signals in quadrature.

2. A radio receiver for frequency shift keyed (FSK) signals on a radio frequency (RF) carrier comprising first and second signal paths to which the received radio signals are applied, each signal path including a mixer circuit followed by a low pass Filter, a local oscillator running at the carrier frequency, the local oscillator output being mixed with the received radio signals in each mixer circuit, means for introducing a 90° phase shift at the carrier frequency such that the outputs of the two mixer circuits are in phased quadrature, a detector being coupled to the output of the demodulator-modulator, is characterised in that:
the receiver is adapted to receive signals at 2n levels where n is an integral number greater than 1 and the demodulator has n stages each of which includes first and second signal paths to which the received radio signals to that stage are applied, each signal path including a mixer circuit, a local oscillator running at the carrier frequency or an integral multiple of the carrier frequency respectively, the local oscillator output being applied to one mixer circuit direct and to the other mixer circuit of a pair through means for effecting a 90° phase shift, the said detector being connected to the output of the last of the n stages.

3. A radio receiver as claimed in Claim 2 having four input levels and two stages of demodulation.

4. A radio receiver as claimed in Claim 2 or 3 in which the detector comprises phase lead detectors feeding into two bit rate filters the outputs from which feed ink into a first logic circuit adapted to the coding logic being used to then provide MSB and LSB outputs to the detector.

5. A radio receiver as claimed in Claim 2 or 3 in which the detector comprises phase lead detectors feeding into a first bit rate filter and the output from a second logic circuit feeding into a second bit rate filter, the first logic circuit being adapted to the coding logic being used to then provide a MSB and LSB outputs to the detector.

6. A radio receiver as claimed in Claim 4 or 5 in which the first logic circuit includes a first EXCLUSIVE OR gate.

7. A radio receiver as claimed in Claim 6 in which the second logic circuit comprises a pair of EXCLUSIVE OR gates feeding into an AND gate.

8. A radio receiver as claimed in any previous claim formed as a single integrated circuit.

9. A radio receiver substantially as hereinbefore described with reference to and as shown in the accompanying drawings.
